# EUROPÄISCHE PATENTANMELDUNG

(11) **EP 1 690 995 A1**
(43) Veröffentlichungstag der Anmeldung: **16.08.2006**
(21) Anmeldenummer: 06101587.1
(22) Anmeldetag: 13.02.2006
(51) Int. Cl.: E04C 2/20

(54) **Verfahren zur Herstellung eines Baustoffes sowie ein Baustoff**

(30) Priorität: 25.02.2005 DE 102005009270; 14.02.2005 DE 202005002427 U
(71) Anmelder: Lignolith GmbH, 94447 Plattling (DE)
(72) Erfinder: Hartmann, Heinz, 93092 Barbing-Ipfelkofen (DE)
(74) Vertreter: Bittner, Bernhard

(57) **Zusammenfassung**

Die vorliegende Erfindung betrifft ein Verfahren zur Herstellung von Baustoffen wobei in einem Verfahrensschritt Füllstoffteilchen (21) in ein Behältnis (1) eingefüllt werden, in einem weiteren Verfahrensschritt das Behältnis abgeschlossen wird und ein aufschäumbares Kunstharz (22) in das Behältnis eingefüllt wird wobei die Füllstoffteilchen wenigstens teilweise durchsetzt werden. Das Kunstharz dehnt sich innerhalb des Behältnisses aus und schließlich wird die Zusammensetzung (20) aus dem Behältnis (1) entnommen.

## Beschreibung

Die vorliegende Erfindung betrifft ein Verfahren zur Herstellung eines Baustoffes sowie einen Baustoff. Unter einem Baustoff wird ein Material verstanden, welches zum Bauen von beispielsweise Gebäuden verwendet werden kann. Daneben kann der erfindungsgemäße Baustoff jedoch beispielsweise auch zur Herstellung von Fahrzeugen oder Möbeln verwendet werden.

Aus dem Stand der Technik sind diverse Baustoffe bekannt, wie beispielsweise Marmor, Metalle oder Kunststoffe, die beispielsweise in Platten oder Blockform vorliegen. So ist es beispielsweise bekannt, zur Wärmedämmung Hartschaumstoffe wie Polystyrol oder Polyurethan einzusetzen. Diese Baustoffe bieten sehr günstige Wärmedämmungseigenschaften und sind relativ einfach zu verarbeiten.

Polyurethan - Ortschaum entsteht durch die chemische Reaktion eines Polyolgemisches mit Isocyanat. Derartige Schaumkunststoffe haben in letzter Zeit an Bedeutung gewonnen. Besondere Beachtung kommt dabei der Erzeugung von Schaumteilen mit unterschiedlichem Raumgewicht über den Querschnitt (Strukturschaum) und der Herstellung großer Formteile im Spritzgießverfahren (Reaction injection molding, RIM) zu.

Insbesondere in der Baubranche ist man um Baustoffe bemüht, die einerseits eine gute Wärmedämmung aufweisen, daneben aber auch ein möglichst geringes Gewicht aufweisen. Daneben besteht ein Bedarf an kostengünstigen Baustoffen. Eine weiteres Kriterium für den gewünschten Baustoff ist eine Steifigkeit bzw. Festigkeit, die groß genug ist, um den Baustoff auch als Bauplatte, beispielsweise beim Innenausbau verwenden zu können.

Der vorliegenden Erfindung lag daher die Aufgabe zugrunde, einen Baustoff zur Verfügung zu stellen, der einerseits ein hohes Mass an Stabilität aufweist, andererseits eine zufriedenstellende Wärmedämmung bietet und zu günstigem Preis herstellbar ist. Daneben sollte der Baustoff ohne hohen Aufwand entsorgbar sein.

Diese Aufgabe wird durch das erfindungsgemäße Verfahren sowie den erfindungsgemäßen Baustoff erreicht. Vorteilhafte Ausführungsformen und Weiterbildungen sind Gegenstand der Unteransprüche.

Erfindungsgemäß werden in einem Verfahrensschritt Füllstoffteilchen in ein Behältnis eingefüllt. In einem weiteren Verfahrensschritt wird das Behältnis abgeschlossen. In einem weiteren Verfahrensschritt wird ein aufschäumbares Kunstharz in das Behältnis eingefüllt und anschließend das Kunstharz innerhalb des Behältnisses ausgedehnt. Schließlich wird die Zusammensetzung aus dem Kunstharz und den Füllstoffteilchen aus dem Behältnis entnommen.

Bevorzugt ist das Behältnis aus einem Material hergestellt, das hohen Drücken standhält, um nicht unter der Last des sich ausdehnenden Kunstharzes zu brechen. Unter einem Abschließen des Behältnisses wird verstanden, dass der innerhalb dieses Behältnisses liegende Raum im wesentlichen verschlossen wird, mit Ausnahme von Öffnungen, durch welche hindurch das Kunstharz, bzw. wenigstens eine Komponente des Kunstharzes eingefüllt wird.

Ein Verschließen kann jedoch auch dadurch erreicht werden, dass das Behältnis mit einer offenen Unterseite auf den Boden gestellt wird. Um gleichwohl den entstehenden Drücken standhalten zu können, wird in diesem Fall bevorzugt das Behältnis während des Aufschäumprozesses von oben beschwert oder gegenüber dem Boden arretiert.

Bevorzugt ist das Kunstharz aus wenigstens zwei Komponenten zusammengesetzt, wobei durch das Zusammenführen der beiden Komponenten ein Aufschäumen des Kunstharzes bewirkt wird. Unter einer Zusammensetzung aus zwei Komponenten wird auch die Verwendung eines an sich einkomponentigen Kunstharzes verstanden welches mit Hilfe eines Treibmittels aufgeschäumt wird.

Unter Füllstoffteilchen werden Teilchen verstanden, welche im Gegensatz zu Pulvern oder Mehlen eine erheblich vergrößerte Korngröße aufweisen, wie insbesondere aber nicht ausschließlich Schnipsel, Späne und dergleichen.

Bei einer weiteren bevorzugten Ausgestaltung des Verfahrens ist der Füllstoff aus einer Gruppe von Füllstoffen ausgewählt, welche Blähton, Blähglas, Vermiculite, Perlite, Hölzer, holzhaltige Materialien, Kunststoffe, Metalle oder dergleichen oder Zusammensetzungen aus diesen Füllstoffen enthält. Besonders bevorzugt wird Holz oder ein holzhaltiges Material verwendet. Die Verwendung von Holz hat den Vorteil dass dieses einerseits zu geringem Preis in ausreichenden Mengen zur Verfügung steht -etwa in Form von Holzschnipseln, welche als Abfallprodukt abfallen- und einerseits relativ leicht ist, so dass auch der entstehende Baustoff relativ leichtgewichtig wird. Auch andere mineralische Füllstoffe bieten den Vorteil einer relativ einfachen Entsorgbarkeit.

Bevorzugt werden die wenigstens zwei Komponenten des Kunstharzes vor dem Einfüllen in das Behältnis zusammengemischt. Die Zusammenmischung des Kunstharzes bewirkt eine sehr starke Ausdehnung desselben. Das sich ausdehnende Kunstharz wird in das Behältnis eingeführt und mischt sich dort mit den bereits in dem Behältnis vorhandenen Füllstoffen.

Es ist jedoch auch möglich, die Komponenten erst innerhalb des Behältnisses zusammenzuführen.

Bevorzugt wird das Kunstharz aus einer Gruppe von Kunstharzen ausgewählt, welche ungesättigte Polyesterharze, Vinylesterharze, Epoxidharze, Polyurethane, Phenolharze, Harnstoffharze, Melaminharze oder dergleichen enthält. Besonders bevorzugt wird als Kunstharz, genauer gesagt als aufschäumbares Kunstharz Polyurethan verwendet. Besonders bevorzugt wird Polyurethanschaum in harter Schaumqualität verwendet, wobei unter harter Schaumqualität verstanden wird dass der Schaum eine Dichte von 10 - 90 kg/m³ aufweist. Diese zweikomponentigen Polyurethanschäume sind aus dem Stand der Technik bekannt und kostengünstig zur Verfügung zu stellen.

Bevorzugt wird eine gut benetzende Ausgangsmischung verwendet, die so dünnflüssig ist, dass sie sich beim Aufschäumen großvolumig zwischen einer losen Schüttung der Füllstoffteilchen verteilt. Bevorzugt werden dabei die Füllstoffteilchen gegen ein ungewolltes Aufschwimmen beschwert werden.

Bevorzugt wird die verwendete Polyol - Komponente des Polyurethanschaums aus nachwachsenden Rohstoffen wie Sojaöl, Sonnenblumenöl, Rapsöl, Rizinusöl oder anderen natürlichen Ölen hergestellt.

Bevorzugt wird das Kunstharz über eine röhrenförmige Einfülleinrichtung in das Behältnis eingefüllt. Diese Einfülleinrichtung kann die Form einer Nadel bzw. Lanze haben, die in ihrem Inneren einen Hohlraum aufweist. Diese Nadel bzw. lanzenförmige Ausführung hat den Vorteil, dass die Einfülleinrichtung leichter in die bei einer Ausführungsform bereits in dem Behältnis vorhandenen Füllstoffe eingebracht werden kann. Daneben kann die Nadel ein Aussengewinde aufweisen, um in die bereits eng aneinander liegenden Füllstoffteilchen eingeschraubt zu werden.

Bevorzugt wird die röhrenförmige Einrichtung vor dem Einfüllen des Kunstharzes bis zu einem vorgegebenen Bereich, besonders bevorzugt im wesentlichen bis zu einer Mittelebene des Behältnisses eingeführt. Das anschließend einzufüllende Kunstharz dehnt sich mit in etwa gleicher Geschwindigkeit in alle Raumrichtungen aus. Daher empfiehlt es sich, das offene Ende der röhrenförmigen Einrichtung in etwa auf halber Höhe des Behältnisses anzuordnen, damit der gesamte Innenraum des Behältnisses im wesentlichen gleichmäßig gefüllt wird.

Bevorzugt wird die Einfülleinrichtung während des Einfüllvorgangs oder besonders bevorzugt unmittelbar nach dem Einfüllvorgang aus dem Behältnis abgezogen. Falls nach dem Einfüllen zu lange abgewartet wird, tritt eine Verhärtung des Kunstharzes auf, was ein Abziehen erheblich erschwert.

Bevorzugt wird das erfindungsgemäße Verfahren bei Raumtemperatur durchgeführt um auf diese Weise die Energiebilanz zu verbessern.

Bevorzugt wird zunächst eine erste vorgegebene Teilmenge an Füllstoffteilchen in das Behältnis eingebracht, anschließend die Einfülleinrichtung und anschließend eine zweite vorgegebene Teilmenge. So kann beispielsweise das Behältnis zunächst zur Hälfte mit Füllstoffteilchen angefüllt werden, anschließend die Einfülleinrichtung eingeführt werden und daraufhin die zweite Hälfte des Behältnisses mit Füllstoffteilchen gefüllt werden. Auf diese Weise wird vermieden, dass die Einfülleinrichtung durch die eventuell dicht gedrängten Füllstoffteilchen hindurchgestoßen werden muss.

Bevorzugt werden die Füllstoffteilchen unter einem Druck eingeführt, bzw. die eingeführten Füllstoffteilchen unter einen Druck gesetzt, der zwischen 1 bar und 20 bar, bevorzugt zwischen 2 bar und 10 bar und besonders bevorzugt zwischen 3 bar und 8 bar liegt. Durch die Anwendung derartiger Drücke wird eine hohe Packungsdichte der in das Behältnis eingeführten Füllstoffe erreicht, was letztlich zu einem engen Zusammenliegen der Füllstoffteilchen führt. Eine Möglichkeit, die beschriebenen Drücke zu erzeugen, besteht darin, dass das Behältnis im wesentlichen vollständig mit Füllstoffen gefüllt wird und anschießend der Deckel des Behältnisses nach unten gedrückt und arretiert wird.

Bevorzugt wird eine Vielzahl von Einfülleinrichtungen verwendet. Diese sind besonders bevorzugt nebeneinander angeordnet. Durch die Verwendung einer Vielzahl von Einfülleinrichtungen können auch langgestreckte Behältnisse wie insbesondere aber nicht ausschließlich quaderförmige Behältnisse gleichmäßig mit Kunstharz versehen werden.

Bevorzugt wird die wenigstens eine Einfülleinrichtung über die Oberseite des Behältnisses eingeführt. Es ist jedoch auch möglich, die Einfülleinrichtung über eine Seitenfläche oder eine Vielzahl von Einfülleinrichtung über wenigstens teilweise unterschiedliche Seitenflächen bzw. die obere Fläche einzuführen.

Bei einer weiteren bevorzugten Ausführungsform weist das Behältnis abgerundete Ecken auf, welche in besonders vorteilhafter Weise die entstehenden Drücke auffangen können.

Bevorzugt wird das Kunstharz unter Druck und besonders bevorzugt unter Verwendung von Pressluft oder anderen Gasen eingefüllt. Auf diese Weise kann eine schnellere Einfüllung des Kunstharzes in das Behältnis erreicht werden.

Bevorzugt wird ein Anteil der Füllstoffteilchen mit einer Komponente des Kunstharzes vorbehandelt. Beispielsweise wird ein Anteil der Füllstoffteilchen vor dem Einbringen in die Komponente eingetaucht oder zunächst eine gewisse Menge der ersten Komponente in das Behältnis eingebracht in die dann wiederum die Füllstoffteilchen eingebracht werden. Ein anschließendes Einbringen der zweiten Komponente des Kunstharzes führt zu einem Aufschäumen. Besonders bevorzugt wird bei dieser Ausführungsform dem Behältnis bzw. den in dem Behältnis vorhandenen Substanzen Wärme zugeführt, wobei sich Temperaturen im Bereich von 180°C als besonders prozessfördernd erwiesen haben.

Bevorzugt wird wenigstens ein Anteil der Füllstoffteilchen vor dem Einfüllen in das Behältnis vorbehandelt, besonders bevorzugt versiegelt. Durch diese Versiegelung wird erreicht, dass die Füllstoffteilchen widerstandskräftiger gegenüber äußeren Einwirkungen sind, so, wenn Holzteilchen verwendet werden, diese weniger anfällig gegen Fäulnis sind. Durch diese Massnahme wird das gesamte Endprodukt weniger anfällig gegenüber Fäulnis oder anderen ungewollten Einflüssen. Bei einer Ausführungsform wird die Versiegelung in Form einer Verkieselung durchgeführt.

Bei einer weiteren bevorzugten Ausführungsform weisen die Füllstoffteilchen eine Längenausdehnung auf, die zwischen 2mm und 50mm , bevorzugt zwischen 3mm und 30mm und besonders bevorzugt zwischen 4mm und 20mm liegt. Bevorzugt werden ferner Füllstoffe in im wesentlichen kubischer Form verwendet, die Kantenlängen zwischen 2mm und 60mm , bevorzugt zwischen 4mm und 30mm aufweisen. Daneben können auch Füllstoffgranulate verwendet werden, die Kornverteilungen zwischen 1 mm und 50mm bevorzugt zwischen 2mm und 20mm verwenden.

Bevorzugt werden Füllstoffteilchen aus unterschiedlichen Materialien verwendet, wobei besonders bevorzugt die weiteren Materialien aus einer Gruppe von Materialien ausgewählt sind, welche Kunststoffe, Metalle, Papier, Pappe, Gläser und dergleichen enthält. Durch diese Vorgehensweise können unterschiedliche Stoffe, beispielsweise unterschiedliche Abfallreste eingefüllt werden.

Daneben kann auch Schreddermaterial von recycelten Baustoffen wie von Leichtbaustoff oder von Dämmstoffplatten beigefügt werden. Auch die Verwendung von Schreddermaterial aus Recycling ― Polyurethan ― Hartschaumplatten oder Schreddermaterial aus nachwachsenden Rohstoffen wie z.B. Chinaschilf, Sonnenblumenstengeln, Maisstengeln, oder dergleichen kann als Füllstoff verwendet werden.

Bevorzugt werden neben den Füllstoffen ausgedehnte Stützkörper eingebracht. Diese Stützkörper können beispielsweise die Form von Streifen, oder kleinen Platten haben. Des weiteren ist auch eine abgewinkelte Struktur der Stützkörper möglich.

Bei einem weiteren bevorzugten Verfahren wird in das Behältnis eine Gitter- oder Netzstruktur eingebracht, die von den Wänden des Behältnisses, beispielsweise durch Verwendung von Stützen, beabstandet ist. In diese Gitterstruktur, die bevorzugt ebenfalls geschlossen ist, werden die Füllteilchen eingebracht. Wird anschließend das Kunstharz hinzugefügt, wird sichergestellt, dass der entstehende Körper an seinen Aussenwänden keine (gegen äußere Einflüsse anfälligen) Füllteilchen aufweist.

Bevorzugt werden die Füllstoffe in loser Schüttung verschäumt. Durch diese Vorgehensweise wird eine im wesentlichen zufällige und damit in sich besonders stabile Endformation erreicht.

Bevorzugt werden in das Behältnis Zusatzmittel eingebracht, die aus einer Gruppe von Zusatzmitteln ausgewählt sind, welche farbgebende Stoffe, Flammschutzmittel, Stabilisatoren oder dergleichen enthält. Als farbgebende Stoffe kommen beispielsweise Farbpigmente wie Eisenoxide oder Spinellpigmente in Betracht, als Flammschutzmittel beispielsweise Phosphorsäureester oder Aluminiumhydroxidderivate.

Bevorzugt wird die Zusammensetzung aus den Füllstoffen und dem Kunstharz nach der Entnahme aus dem Behältnis zerteilt. Das Zerteilen kann insbesondere aber nicht ausschließlich durch Zersägen erfolgen, denkbar sind jedoch auch andere Methoden, wie Laserschneiden, Brechen oder dergleichen.

Um die Entnahme der Zusammensetzung aus dem Behältnis zu erleichtern, wird besonders vorteilhaft auf ein wenigstens teilweise zerlegbares Behältnis zurückgegriffen. Die Zusammensetzung kann jedoch auch nach Öffnen oder Wegklappen einer Seite aus dem Behältnis herausgezogen werden . Schließlich ist es auch möglich, ein unten offenes Behältnis nach dem Aufschäumen nach oben unter Zurücklassung der Zusammensetzung abzuziehen.

Die vorliegende Erfindung ist ferner auf einen Baustoff gerichtet, der eine Vielzahl von Füllstoffteilchen aufweist, die durch ein aufgeschäumtes Kunstharz miteinander verbunden sind. Bevorzugt sind die Füllstoffteilchen im wesentlichen von Kunstharz durchsetzt, wobei es sich besonders bevorzugt bei dem Kunstharz um Polyurethan handelt. Dieser Baustoff eignet sich insbesondere aber nicht ausschließlich zur Verwendung in tragenden Wandsystemen.

Bevorzugt sind die Füllstoffteilchen derart miteinander verbunden, dass im wesentlichen jedes Füllstoffteilchen wenigstens ein weiteres Füllstoffteilchen berührt. Durch dieses gegenseitige Berühren wird eine gegenseitige Stabilisierung der Füllstoffteilchen gegeneinander erreicht und damit eine höhere Gesamtstabilität des gesamten Baustoffes.

Bevorzugt wird der erfindungsgemäße Baustoff nach einem Verfahren der oben beschriebenen Art hergestellt. Besonders bevorzugt ist der Baustoff in Form von Platten ausgeführt.

Die vorliegende Erfindung ist ferner auf die Verwendung eines Baustoffes der beschriebenen Art zur Auskleidung von Räumen und in tragenden Wandsystemen gerichtet.

Die vorliegende Erfindung ist ferner auf eine Baustoffzusammensetzung gereichtet, wobei ein Baustoff der oben beschriebenen Art mit einem weiteren Trägerbaustoff zusammengesetzt und bevorzugt best verbunden ist. Dieser Trägerbaustoff ist ferner aus einer Gruppe von Trägerbaustoffen ausgewählt, die Marmor, Aluminium, Kunststoff, Metalle oder Verbindungen hieraus enthält.

Bevorzugt werden die Füllstoffteilchen durch Aufschäumen auf eine vorgelegte Platte aus Vollholz, OSB, Ziegel, Gipskarton oder Fermacell zu der Baustoffzusammensetzung verklebt. Daneben kann bei der Produktion auch eine Putzträgerplatte wie beispielsweise eine Schilfrohrmatte oder eine zementgebundene Holzfaserplatte vorgelegt werden und auf diese Weise eine Putzträgerplatte mit integrierter Dämmung hergestellt werden.

Diese Baustoffzusammensetzungen können beispielsweise in Wandverkleidungen, Fassaden oder dergleichen angewandt werden.

So ist es beispielsweise möglich, Baustoffzusammensetzungen aus Marmor und dem erfindungsgemäßen Baustoffe, herzustellen, die die Vorteile des Marmors, nämlich eine ansehnliche Optik mit den Vorteilen des erfindungsgemäßen Baustoffes, nämlich beispielsweise dem geringen Preis und dem geringen Gewicht verbinden. Eine derartige Baustoffzusammensetzung kann beispielsweise für die Herstellung von Tischplatten, aber auch für Raumverkleidungen verwendete werden.

Weitere Ausführungsformen des erfindungsgemäßen Verfahren sowie des erfindungsgemäßen Baustoffes ergeben sich aus den beigefügten Zeichnungen. Darin zeigen:
- Fig. 1: eine schematische Darstellung des erfindungsgemäßen Verfahrens;
- Fig. 2: eine Darstellung des Behältnisses für das erfindungsgemäße Verfahren in einer weiteren Ausführungsform; und
- Fig. 3: einen erfindungsgemäßen Baustoff.

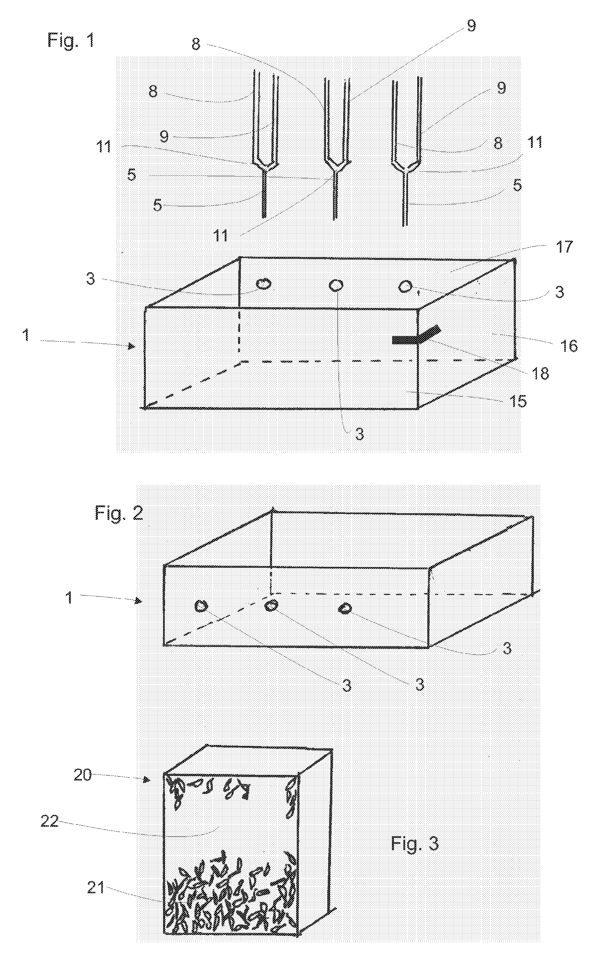

Fig. 1 zeigt eine schematische Darstellung des erfindungsgemäßen Verfahrens zur Herstellung eines Baustoffes. Das Bezugszeichen 1 bezieht sich auf ein Behältnis in das bereits die (nicht gezeigten) Füllstoffteilchen eingebracht wurden. Das in Fig 1 gezeigte Behältnis 1 weist eine im wesentlichen quaderförmige Gestalt auf, daneben kann das Behältnis jedoch auch kubisch ausgeführt sind. Über Öffnungen 3 werden in das Behältnis 1 die Einfülleinrichtungen 5 eingeführt.

Diese Einfülleinrichtungen 5 weisen eine rohrförmige Gestalt auf. Im eingeführten Zustand ragen die Einfülleinrichtungen etwa bis zur halben Höhe des Behältnisses in dieses hinein. Dadurch wird erreicht, dass das gesamte Innenvolumen des Behältnisses im wesentlichen gleichmäßig ausgefüllt wird, da sich das Kunstharz in alle Richtungen etwa mit der gleichen Geschwindigkeit ausdehnt.

Am oberen Ende der Einfülleinrichtungen 5 sind jeweils Verbindungsleitungen wie insbesondere aber nicht ausschließlich Schläuche 8 und 9 vorgesehen, über die jeweils zwei Komponenten des Kunstharzes zugeführt werden können, wobei sich die Komponenten jeweils in einem Zwischenstück 11 vermischen. Bevorzugt ist die Querschnittsfläche der Öffnungen deutlich größer als die Aussenfläche der Einfülleinrichtungen, damit nach oder während des Einfüllens des Kunstharzes die Einfülleinrichtungen möglichst einfach aus dem Behältnis abgezogen werden können.

In dem Behältnis können (nicht gezeigte) Klappen vorgesehen sein, die die Öffnungen nach dem Abziehen der Einfülleinrichtung verschließen oder verkleinern.

Bei einem weiteren erfindungsgemäßen Verfahren werden die Einfülleinrichtungen fast bis zu dem Boden 15 des Behältnisses 1 eingeführt und dann während des Einbringens des Kunstharzes abgezogen. In diesem Fall wird eine in wesentlichen gleichmäßige Verteilung des Kunstharzes auch durch das Abziehen der Einfülleinrichtung selbst erreicht.

In einer bevorzugten Ausführungsform kann an den einzelnen Zwischenstücken 11 ein (nicht gezeigtes) Ventil vergesehen werden, durch dessen Öffnen ein Zusammenfließen der jeweiligen Komponenten bewirkt wird. Daneben ist bevorzugt auch eine Steuerungseinrichtung vorhanden, die bewirkt, dass die einzelnen Ventile im wesentlichen gleichzeitig geöffnet werden um so ein im wesentlichen gleichzeitiges Einfließen des aufschäumenden Kunstharzes in alle drei Öffnungen zu erreichen.

In einer weiteren (nicht gezeigten) Ausführungsform ist ein zentrales Zwischenstück vorgesehen, in dem die Komponenten gemischt und anschließend in das Behältnis 1 durch die Öffnungen eingeführt werden.

Bevorzugt stehen die Komponenten in den jeweiligen Verbindungsleitungen unter einem vorgegebenen Druck. Anstelle der in Fig. 1 gezeigten 3 Einfülleinrichtungen 5 kann auch eine größere oder eine kleinere Anzahl von Einfülleinrichtungen vorgesehen sein.

Fig. 2 zeigt eine weitere Ausführungsform eines Behältnisses 1 für das erfindungsgemäße Verfahren. Im Gegensatz zu dem in Fig.1 gezeigten Behältnis sind hier die Öffnungen 3 an der Seitenfläche 14 angeordnet. Ferner können auch mehrere Öffnungen an unterschiedlichen Seitenflächen bzw. der oberen Seitenfläche des Behältnisses angeordnet sein.

Die Einfülleinrichtung bzw. das Einfüllrohr kann seitliche Öffnungen aufweisen, durch die das Kunstharz austreten kann. Auch ist es denkbar, die Einfülleinrichtungen mit einem (in Fig. 1 nicht gezeigten Querrohr zu verbinden, dass etwa in Höhe der Mittelebene des Behältnisses liegt. Dieses Querrohr verbleibt bei dieser Ausführungsform in dem Behältnis und wird schließlich vom Rest des Körpers abgetrennt, etwa wenn dieser in Platten zerschnitten wird.

Mittels Schließeinrichtungen 18 kann das Behältnis nach der Herstellung der Zusammensetzung aus Kunstharz und Füllstoffen geöffnet werden, damit die Zusammensetzung aus dem Behältnis entnommen werden kann.

Fig. 3 zeigt einen erfindungsgemäßen Baustoff 20. Dieser weist eine Vielzahl von Füllstoffteilchen 21 auf, die von dem aufgeschäumten Polyurethan 22 umgeben sind. Man erkennt, dass die einzelnen Füllstoffteilchen im wesentlichen zufällig orientiert und (wenngleich nur teilweise dargestellt) über das Volumen des Baustoffes 20 verteilt sind. Wie insbesondere am linken unteren Rand in Fig. 3 erkennbar, steht jedes Füllstoffteilchen mit wenigstens einem weiteren Teilchen in Berührung. Auf dieser Weise wird eine gegenseitige Stabilisierung der einzelnen Teilchen erreicht.

Zusätzlich zu den Füllstoffteilchen kann auch ein weiteres (nicht gezeigtes) Stützmaterial beigefügt werden, etwa in Form von Plättchen die besonders bevorzugt in wenigstens einem Abschnitt eine gekrümmte oder gewellte Form aufweisen. Diese gewellte Form bringt ein höheres Maß an Stabilität mit sich.

Der gesamte Herstellvorgang geschieht am kostengünstigsten, wie oben ausgeführt bei Raumtemperatur. Die Startzeit des Schaums liegt bei ca. 15 - 25 s, die Steigzeit bei 3 - 6 min. und die Entformzeit bei ca. 30 min.

Der sehr innige Verbund aller Zuschläge macht den Werkstoff sehr gut nagel- und schraubbar. Verleimungen hoher Qualität können mit PU-Leimen erfolgen und auch das Kleben mit mineralischen Klebern (auf Wasserglasbasis oder Zementbasis) ist möglich.

Bei Platten mit Dichten von ca. 300 - 400 kg/m³ ist die thermische Isolation sehr gut, die Schalldämmung abhängig von den Füllstoffen mäßig gut bis gut.

Es sind auch kleinere Dichten erzielbar. Platten/Baustoffe mit höheren Dichten können auch als Leichtbauplatten oder Leichtbausteine für den Innenausbau verwendet werden.

Durch Aufschäumen des Leichtbaustoffs auf vorgelegte Vollholz-, Ziegel-, OSB-, Gipskarton- und Fermacellplatten können gedämmte Verbundplattenelement mit schon fertiger Oberflächenstruktur, u.a. für den Innenausbau geeignet, hergestellt werden. Diese Verbundelemente können mit den geeigneten Oberflächen auch für Außenkonstruktionen eingesetzt werden. So können auch gedämmte Putzträgerplatten erstellt werden, wenn auf vorgelegte Schilfrohrmatten oder zementgebundene Holzfaserplatten aufgeschäumt wird.

Die Ökobilanz wird noch dadurch erhöht, dass auch Polyurethane auf Basis natürlicher Öle wie z.B. Sonnenblumenöl, Rizinusöl oder Sojaöl verwendet werden können. Zusätzlich sind alle Bauplatten nach dem Schreddern wieder als Rohstoff für die Herstellung neuer Platten oder Leichtbaustoffe zu verwenden und dadurch besteht volle Recyclingfähigkeit. Auch das Recycling anderer PU-Schaumstoffplatten für eine Verwendung als Füllstoffzusatz ist denkbar sowie der Einsatz von Schreddermaterialien aus nachwachsenden Rohstoffen wie z.B. Chinaschilf, Sonnenblumenstengel, Mais, Holzabfällen, usw. als Füllstoffkomponente.

Eine prädestinierte Anwendung zeichnet sich ab beim Hausbau und Gebäudeinnenausbau. Die genau definierte Luftdurchlässigkeit lässt bestes Raumklima erwarten.

Von den Grundpreisen der Zuschlagstoffe, dem energetischen und zeitlichen Aufwand sind Gesamtkosten unter denen von Mineralischen Schaumdämmplatten zu erwarten.

### Bezugszeichenliste

- 1: Behältnis
- 3: Öffnung
- 5: Einfülleinrichtung
- 8: Verbindungsleitung für erste Komponente
- 9: Verbindungsleitung für zweite Komponente
- 11: Zwischenstück
- 15: Boden des Behältnisses
- 16: Seitenfläche des Behältnisses
- 17: Oberseite des Behältnisses
- 18: Schließeinrichtung
- 20: Baustoff
- 21: Füllstoffteilchen
- 22: Polyurethan

## Patentansprüche

1. Verfahren zur Herstellung von Baustoffen mit den Schritten
- Einfüllen von Füllstoffteilchen (21) in ein Behältnis (1)
- Abschließen des Behältnisses
- Einfüllen eines aufschäumbaren Kunstharzes (22) in das Behältnis und wenigstens teilweises Durchsetzen der Füllstoffteilchen
- Ausdehnen des Kunstharzes innerhalb des Behältnisses
- Entnahme der Zusammensetzung (20) aus dem Behältnis.

2. Verfahren nach Anspruch 1,
**dadurch gekennzeichnet,dass**
das Kunstharz aus wenigstens zwei Komponenten zusammengesetzt wird.

3. Verfahren nach wenigstens einem der vorangegangenen Ansprüche,
**dadurch gekennzeichnet, dass**
der Füllstoff aus einer Gruppe von Füllstoffen ausgewählt ist, welche Blähton, Blähglas, Vermiculite, Perlite, Hölzer, holzhaltige Materialien oder dergleichen oder Zusammensetzungen aus diesen Füllstoffen enthält.

4. Verfahren nach wenigstens einem der vorangegangenen Ansprüche,
**dadurch gekennzeichnet, dass**
eine röhrenförmige Einfülleinrichtung (5) vor dem Einfüllen des Kunstharzes um bis zu einem vorgegebenen Bereich, bevorzugt im wesentlichen bis zu einer Mittelebene des Behältnisses eingeführt wird.

5. Verfahren nach wenigstens einem der vorangegangenen Ansprüche,
**dadurch gekennzeichnet, dass**
die Füllstoffteilchen unter einem Druck eingeführt bzw. nach dem Einfüllen unter einen Druck gesetzt werden, der
zwischen 1 bar und 15 bar,
bevorzugt zwischen 2 bar und 10 bar und besonders bevorzugt
zwischen 3 bar und 8 bar
liegt.

6. Verfahren nach wenigstens einem der vorangegangenen Ansprüche,
**dadurch gekennzeichnet, dass**
die Füllstoffteilchen eine Längenausdehnung aufweisen, die zwischen 2mm und 50mm, bevorzugt zwischen 3mm und 30mm und besonders bevorzugt zwischen 4mm und 20mm liegt.

7. Verfahren nach wenigstens einem der vorangegangenen Ansprüche,
**dadurch gekennzeichnet, dass** neben den Füllstoffteilchen ausgedehnte Stützkörper eingebracht werden.

8. Baustoff
**dadurch gekennzeichnet,dass**
der Baustoff eine Vielzahl von Füllstoffteilchen aufweist,
die durch ein aufgeschäumtes Kunstharz miteinander verbunden sind.

9. Baustoff nach Anspruch 8,
**dadurch gekennzeichnet, dass**
die Füllstoffteilchen derart miteinander verbunden sind, dass im wesentlichen jedes Füllstoffteilchen wenigstens ein weiteres Füllstoffteilchen berührt.

10. Baustoffzusammensetzung mit einem Baustoff nach einem der vorangegangenen Ansprüche, wobei dieser mit einem weiteren Trägerbaustoff zusammengesetzt ist, der aus einer Gruppe von Trägerbaustoffen ausgewählt ist, die Marmorbaustoffe, Metallbaustoffe, Alubaustoffe, Kunststoffbaustoffe und dergleichen enthält.
